# EUROPEAN PATENT APPLICATION

(11) **EP 4 056 403 A1**
(43) Date of publication of application: **14.09.2022**
(21) Application number: 22156137.6
(22) Date of filing: 10.02.2022
(51) Int. Cl.: B60L 3/00, B60L 3/04

(54) **CHARGE/DISCHARGE CONTROL DEVICE WITH A DISCONNECT CAPABILITY FOR DISCONNECTING A HIGH-VOLTAGE BATTERY FROM THE MOTOR IF A VEHICLE SPEED THRESHOLD IS EXCEEDED**

(30) Priority: 09.03.2021 JP 2021037629
(71) Applicant: Suzuki Motor Corporation, Hamamatsu-shi, Shizuoka 432-8611 (JP)
(72) Inventor: Kobuna, Shingo, Shizuoka, 432-8611 (JP); Okawachi, Ryohei, Shizuoka, 432-8611 (JP)
(74) Representative: Henkel & Partner mbB

(57) **Abstract**

[Obj ect]

Provided is a charge/discharge control device capable of electrically disconnecting a high-voltage battery by detecting a collision without consuming extra electric power even in an ignition off state and a charged state.

[Solution]

A charge/discharge control device includes: a high-voltage battery 4 which is a main power supply; an inverter 3 which drives a motor 2 by receiving electric power supplied from the high-voltage battery 4; a negative electrode side contactor 41 and a positive electrode side contactor 42 which connect and disconnect an electrical connection between the high-voltage battery 4 and the inverter 3; a normal charge contactor 62 which connects and disconnects an electrical connection between the high-voltage battery 4 and a normal charging connector 6; a negative electrode side quick charge contactor 71 and a positive electrode side quick charge contactor 72 which connect and disconnect an electrical connection between the high-voltage battery 4 and a quick charging connector 7; and a contactor switching control unit 5 which turns off the contactor if a speed of a vehicle 1 is equal to or faster than a first vehicle speed when electric power is supplied from an external power supply to the high-voltage battery 4.

## Description

### [Technical Field]

This invention relates to a charge/discharge control device.

### [Background of the Invention]

Generally, in an electric vehicle which is in an ignition off state and a charged state, since electric power is not supplied to an ECU (Electronic Control Unit) other than the one used for charging, electric power is not supplied to the ECU including a collision detection sensor and a collision cannot be detected.

Patent Literature 1 describes that electric power is supplied to an ECU even in an ignition off state and a charged state and a switch between a high-voltage battery and a power drive unit is turned off when a collision is detected.

### [Prior Art]

### [Patent Literature]

[Patent Literature 1] JP 2011-217544 A

### [Summary of the Invention]

### [Problem to be solved by the Invention]

However, in such a control device, since it is necessary to supply electric power to the ECU that does not contribute to charging, extra electric power is consumed and charging efficiency decrease.

Here, an object of this invention is to provide a charge/discharge control device capable of electrically disconnecting a high-voltage battery by detecting a collision without consuming extra electric power even in an ignition off state and a charged state.

### [Means to solve the problem]

In order to attain the above-mentioned objects, according to aspects of this invention, there is provided a charge/discharge control device for a vehicle including a high-voltage battery corresponding to a main power supply, a charging port connected to a charging connector of an external power supply and supplying electric power to the high-voltage battery, an inverter driving a motor by receiving electric power supplied from the high-voltage battery, and a contactor connecting and disconnecting an electrical connection between the high-voltage battery, the inverter, and the charging port, including: a contactor switching control unit switching a connection/disconnection state of the contactor, wherein the contactor switching control unit turns off the contactor if a speed of the vehicle is equal to or faster than a first vehicle speed when electric power is supplied from the external power supply to the high-voltage battery via the charging port.

### [Effect of the Invention]

In this way, according to this invention, it is possible to electrically disconnect the high-voltage battery by detecting a collision without consuming extra electric power even in the ignition off state and the charged state.

### [Brief description of figures]

[Fig. 1] Fig. 1 is a schematic configuration diagram of a charge/discharge control device according to a first embodiment of this invention.
[Fig. 2] Fig. 2 is a flowchart showing a procedure of a process of the charge/discharge control device according to the first embodiment of this invention.
[Fig. 3] Fig. 3 is a schematic configuration diagram of a charge/discharge control device according to a second embodiment of this invention.
[Fig. 4] Fig. 4 is a flowchart showing a procedure of a process of the charge/discharge control device according to the second embodiment of this invention.

### [Embodiment(s) of the Invention]

A charge/discharge control device according to embodiments of this invention is a charge/discharge control device for a vehicle including a high-voltage battery corresponding to a main power supply, a charging port connected to a charging connector of an external power supply and supplying electric power to the high-voltage battery, an inverter driving a motor by receiving electric power supplied from the high-voltage battery, and a contactor connecting and disconnecting an electrical connection between the high-voltage battery, the inverter, and the charging port, including: a contactor switching control unit switching a connection/disconnection state of the contactor, wherein the contactor switching control unit turns off the contactor if a speed of the vehicle is equal to or faster than a first vehicle speed when electric power is supplied from the external power supply to the high-voltage battery via the charging port.

Accordingly, the charge/discharge control device according to embodiments of this invention can electrically disconnect the high-voltage battery by detecting a collision without consuming extra electric power even in the ignition off state and the charged state.

### [Embodiments]

Hereinafter, a charge/discharge control device according to embodiments of this invention will be described in detail with reference to the drawings.

### (First embodiment)

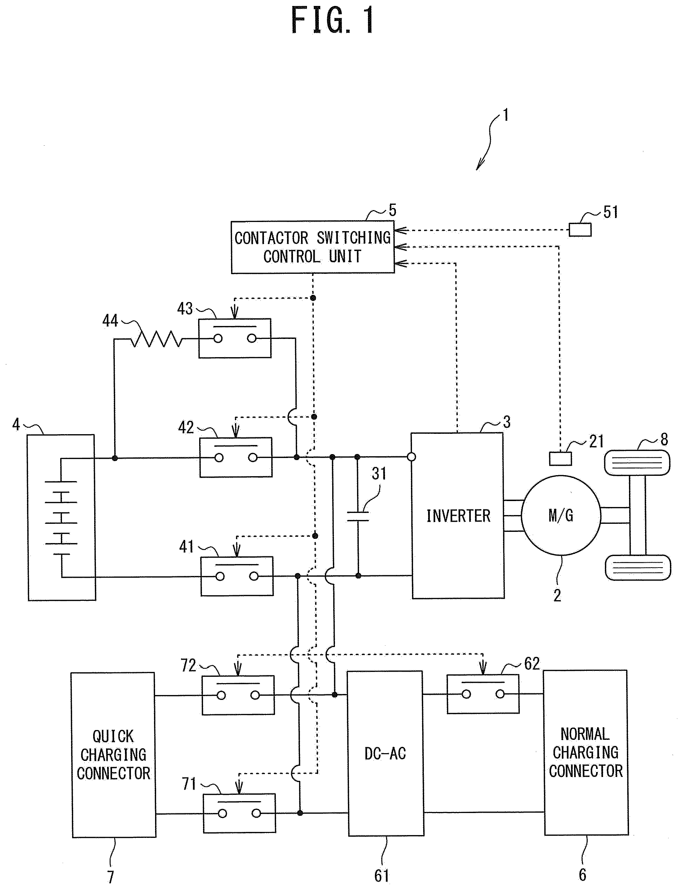

In Fig. 1, a vehicle 1 equipped with a charge/discharge control device according to a first embodiment of this invention includes a motor 2, an inverter 3, a high-voltage battery 4, and a contactor switching control unit 5.

The motor 2 is configured as, for example, a synchronous motor including a rotor in which a plurality of permanent magnets are embedded and a stator on which a stator coil is wound. In the motor 2, a rotating magnetic field is formed in the stator by applying three-phase AC power to the stator coil and the rotor rotates by the rotating magnetic field to generate a driving force.

Further, the motor 2 is driven to use the rotational resistance during power generation for braking the vehicle 1. Accordingly, the motor 2 has a function capable of generating electric power by regeneration. In this way, the motor 2 also functions as a generator and can generate electric power for charging the high-voltage battery 4.

A rotating shaft of the motor 2 is connected to a drive wheel 8 through a decelerator, a driving shaft, and the like (not shown). The motor 2 drives the drive wheel 8 through the decelerator, the driving shaft, and the like.

A rotation speed sensor 21 which detects the rotation speed of the motor 2 is provided in the motor 2.

The rotation speed sensor 21 outputs the rotation in the rotation direction when the vehicle 1 moves forward as a positive rotation speed.

The inverter 3 supplies three-phase AC power to the motor 2. Further, the inverter 3 converts the three-phase AC power generated by the motor 2 into DC power to charge the high-voltage battery 4.

A smoothing capacitor 31 is connected between the positive electrode and the negative electrode of the input terminal connecting the inverter 3 and the high-voltage battery 4. The smoothing capacitor 31 smoothes the voltage of DC power generated between the positive electrode and the negative electrode.

The high-voltage battery 4 is composed of, for example, a nickel storage battery, a lithium storage battery, or the like and is configured by connecting a plurality of cells in series. The high-voltage battery 4 supplies electric power to the motor 2 via the inverter 3. The charge/discharge current, voltage, and battery temperature of the high-voltage battery 4 can be detected by the contactor switching control unit 5.

A negative electrode side contactor 41 which is a contactor is provided on the negative electrode side between the inverter 3 and the high-voltage battery 4. A positive electrode side contactor 42 which is a contactor is provided on the positive electrode side between the inverter 3 and the high-voltage battery 4. A circuit in which a precharge contactor 43 and a precharge resistance 44 are connected in series is connected to the positive electrode side contactor 42 in parallel to the positive electrode side contactor 42.

The negative electrode side contactor 41 and the positive electrode side contactor 42 take any one of an on state in which the inverter 3 and the high-voltage battery 4 are electrically connected and an off state in which the inverter 3 and the high-voltage battery 4 are electrically disconnected in response to the control of the contactor switching control unit 5.

The precharge contactor 43 takes any one of an on state in which the precharge resistance 44 is connected in parallel to the positive electrode side contactor 42 and an off state in which the precharge resistance 44 is electrically disconnected from the positive electrode side contactor 42 in response to the control of the contactor switching control unit 5.

For example, the precharge contactor 43 is controlled to take an on state before the motor 2 is operated and to take an off state after the positive electrode side contactor 42 becomes an on state.

A normal charging connector 6 and a quick charging connector 7 are connected to the high-voltage battery 4 in parallel to the inverter 3.

A converter 61 is connected between the high-voltage battery 4 and the normal charging connector 6. The converter 61 converts AC power supplied to the normal charging connector 6 which is the charging port of an AC external power supply into DC power.

A normal charge contactor 62 which is a contactor is provided at one of the connection paths between the high-voltage battery 4 and the normal charging connector 6. The normal charge contactor 62 takes any one of an on state in which the high-voltage battery 4 and the normal charging connector 6 are electrically connected and an off state in which the high-voltage battery 4 and the normal charging connector 6 are electrically disconnected in response to the control of the contactor switching control unit 5.

The normal charging connector 6 detects whether or not the charging connector of the AC external power supply is connected and notifies the contactor switching control unit 5 of the detection result.

A negative electrode side quick charge contactor 71 which is a contactor is provided on the negative electrode side between the high-voltage battery 4 and the quick charging connector 7. A positive electrode side quick charge contactor 72 which is a contactor is provided on the positive electrode side between the high-voltage battery 4 and the quick charging connector 7.

The negative electrode side quick charge contactor 71 and the positive electrode side quick charge contactor 72 take any one of an on state in which the high-voltage battery 4 and the quick charging connector 7 are electrically connected and an off state in which the high-voltage battery 4 and the quick charging connector 7 are electrically disconnected in response to the control of the contactor switching control unit 5.

The high-voltage battery 4 is charged by the electric power supplied from the DC external power supply by connecting the charging connector of the DC external power supply of the charging equipment installed outside the vehicle 1 to the quick charging connector 7 which is the charging port. The quick charging connector 7 detects whether or not the charging connector of the DC external power supply is connected and notifies the contactor switching control unit 5 of the detection result.

The contactor switching control unit 5 is configured as a computer unit including a CPU (Central Processing Unit), a RAM (Random Access Memory), a ROM (Read Only Memory), an input port, and an output port.

The ROM of the contactor switching control unit 5 stores a program for causing the computer unit to function as the contactor switching control unit 5 together with various control constants and various maps. That is, when the CPU executes the program stored in the ROM, the computer unit functions as the contactor switching control unit 5.

Various sensors including a vehicle speed sensor 51 are connected to the input port of the contactor switching control unit 5 in addition to the inverter 3 and the rotation speed sensor 21. The vehicle speed sensor 51 detects the speed of the vehicle 1.

On the other hand, various control objects including the negative electrode side contactor 41, the positive electrode side contactor 42, the precharge contactor 43, the normal charge contactor 62, the negative electrode side quick charge contactor 71, and the positive electrode side quick charge contactor 72 are connected to the output port of the contactor switching control unit 5.

In the first embodiment, the contactor switching control unit 5 turns off the negative electrode side contactor 41, the positive electrode side contactor 42, the normal charge contactor 62, the negative electrode side quick charge contactor 71, and the positive electrode side quick charge contactor 72 if the speed of the vehicle 1 becomes equal to or faster a predetermined first vehicle speed when electric power is supplied from the external power supply to the high-voltage battery 4 via the normal charging connector 6 or the quick charging connector 7. The first vehicle speed is the speed of the vehicle 1 capable of detecting a collision, which is a value obtained by experiments or the like, for example, 1 km/h.

The contactor switching control unit 5 turns off the negative electrode side contactor 41, the positive electrode side contactor 42, the normal charge contactor 62, the negative electrode side quick charge contactor 71, and the positive electrode side quick charge contactor 72 if the rotation speed of the motor 2 becomes equal to or faster than a predetermined first rotation speed when electric power is supplied from the external power supply to the high-voltage battery 4 via the normal charging connector 6 or the quick charging connector 7. The first rotation speed is the rotation speed of the motor 2 capable of detecting a collision, which is a value obtained by experiments or the like, for example, 100 rpm.

The contactor switching control unit 5 discharges the electric power of the smoothing capacitor 31 to the motor 2 in a single phase by the inverter 3 when the negative electrode side contactor 41, the positive electrode side contactor 42, the normal charge contactor 62, the negative electrode side quick charge contactor 71, and the positive electrode side quick charge contactor 72 are switched to the off state.

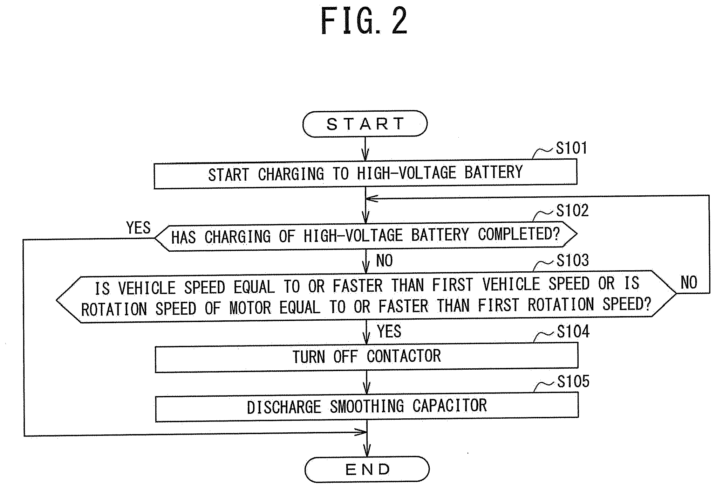

A charge control process using the charge/discharge control device according to the first embodiment with the above-described configuration will be described with reference to Fig. 2. Additionally, the charge control process to be described below is started when it is detected that the charging connector of the external power supply is connected to the normal charging connector 6 or the quick charging connector 7.

In step S101, the contactor switching control unit 5 turns on the normal charge contactor 62 when the charging connector of the external power supply is connected to the normal charging connector 6 while the negative electrode side contactor 41 and the positive electrode side contactor 42 are turned on and starts the charging to the high-voltage battery 4 while the negative electrode side quick charge contactor 71 and the positive electrode side quick charge contactor 72 are turned on when the charging connector of the external power supply is connected to the quick charging connector 7. After the process of step S101 is executed, the contactor switching control unit 5 executes the process of step S102.

In step S102, the contactor switching control unit 5 determines whether or not the charging of the high-voltage battery 4 is completed. The contactor switching control unit 5 determines whether or not the charging of the high-voltage battery 4 is completed using, for example, the estimated SOC (State of Charge), the voltage value, the internal resistance value, and the like of the high-voltage battery 4.

When it is determined that the charging of the high-voltage battery 4 is completed, the contactor switching control unit 5 ends the charge control process. When it is determined that the charging of the high-voltage battery 4 is not completed, the contactor switching control unit 5 executes the process of step S103.

In step S103, the contactor switching control unit 5 determines whether or not the vehicle speed of the vehicle 1 is equal to or faster than the first vehicle speed or the rotation speed of the motor 2 is equal to or faster than the first rotation speed.

When it is determined that the vehicle speed of the vehicle 1 is equal to or faster than the first vehicle speed or the rotation speed of the motor 2 is equal to or faster than the first rotation speed, the contactor switching control unit 5 executes the process of step S104. When it is determined that the vehicle speed of the vehicle 1 is not equal to or faster than the first vehicle speed and the rotation speed of the motor 2 is not equal to or faster than the first rotation speed, the contactor switching control unit 5 executes the process of step S102.

In step S104, the contactor switching control unit 5 turns off the negative electrode side contactor 41, the positive electrode side contactor 42, the normal charge contactor 62, the negative electrode side quick charge contactor 71, and the positive electrode side quick charge contactor 72. After the process of step S104 is executed, the contactor switching control unit 5 executes the process of step S105.

In step S105, the contactor switching control unit 5 discharges the smoothing capacitor 31. After the process of step S105 is executed, the contactor switching control unit 5 ends the charge control process.

In this way, in the first embodiment, the contactor switching control unit 5 turns off the negative electrode side contactor 41, the positive electrode side contactor 42, the normal charge contactor 62, the negative electrode side quick charge contactor 71, and the positive electrode side quick charge contactor 72 if the speed of the vehicle 1 becomes equal to or faster than the predetermined first vehicle speed when electric power is supplied from the external power supply to the high-voltage battery 4 via the normal charging connector 6 or the quick charging connector 7.

It is possible to determine whether or not a collision occurs by the vehicle speed even when the vehicle in a charged state in which the ECU including a collision detection sensor does not function and to disconnect the high-voltage path by detecting the collision without consuming extra electric power even in an ignition off state and a charged state. Accordingly, it is possible to reduce the risk of electric shock when a person touches a high-voltage component after a collision. Further, in a vehicle that does not have a parking lock function and stops a drive wheel by a braking force of a side brake, the drive wheel may move due to factors other than a collision, such as a steep slope or insufficient braking force from the side brake. Even in such a situation, the high-voltage path can be disconnected.

Further, the contactor switching control unit 5 turns off the negative electrode side contactor 41, the positive electrode side contactor 42, the normal charge contactor 62, the negative electrode side quick charge contactor 71, and the positive electrode side quick charge contactor 72 if the rotation speed of the motor 2 becomes equal to or faster than the predetermined first rotation speed when electric power is supplied from the external power supply to the high-voltage battery 4 via the normal charging connector 6 or the quick charging connector 7.

Since the motor 2 and the drive wheel 8 are directly connected, it is possible to determine whether or not a collision occurs not only from the vehicle speed but also the rotation speed of the motor 2 and to reduce the risk of electric shock when a person touches a high-voltage component after the collision by detecting the collision when the rotation speed of the motor 2 is equal to or faster than the first rotation speed to switch the contactor to the non-contact state without consuming extra electric power even in an ignition off state and a charged state.

Further, the contactor switching control unit 5 discharges electric power of the smoothing capacitor 31 to the motor 2 in a single phase by the inverter 3 when the negative electrode side contactor 41, the positive electrode side contactor 42, the normal charge contactor 62, the negative electrode side quick charge contactor 71, and the positive electrode side quick charge contactor 72 are switched to the off state.

After the collision is determined and the contactor is switched to the off state, the electric power stored in the smoothing capacitor 31 is quickly discharged to the motor 2 in a single phase by the inverter 3. Accordingly, it is possible to quickly discharge the smoothing capacitor 31 without rotating the motor 2 and to reduce the risk of electric shock when a person touches a high-voltage component after a collision. Further, since the electric power is discharged without rotating the motor 2, it is possible to suppress the vehicle 1 from moving further after the collision.

### (Second embodiment)

Next, a second embodiment of this invention will be described. Here, since the second embodiment has substantially the same configuration as the first embodiment, the same reference numeral will be given to the same configuration to describe the feature portion.

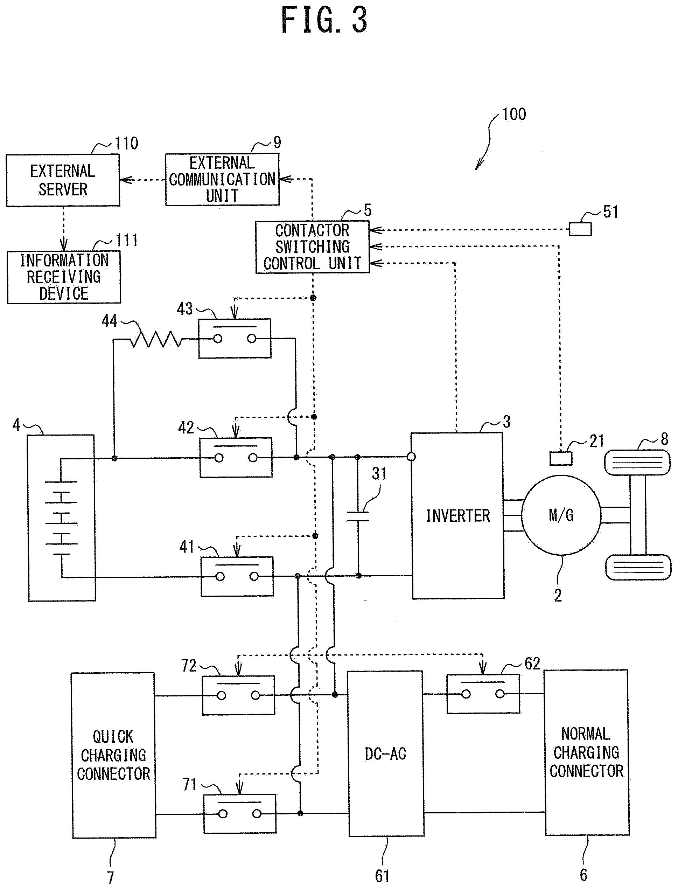

In Fig. 3, a vehicle 100 equipped with a charge/discharge control device according to the second embodiment of this invention includes an external communication unit 9.

The external communication unit 9 communicates with an external server 110 or the like outside the vehicle via a communication medium such as a predetermined wireless network to transmit and receive information.

The external server 110 transmits information by e-mail, a message, or the like to an information receiving device 111 such as a smartphone of the owner of the vehicle 100 via a communication medium such as a predetermined wireless network.

In the second embodiment, the contactor switching control unit 5 transmits abnormality occurrence information to the information receiving device 111 of the owner of the vehicle 100 via the external server 110 if the negative electrode side contactor 41, the positive electrode side contactor 42, the normal charge contactor 62, the negative electrode side quick charge contactor 71, and the positive electrode side quick charge contactor 72 are switched to the off state after the speed of the vehicle 100 becomes equal to or faster than the above-described first vehicle speed or the rotation speed of the motor 2 becomes equal to or faster than the above-described first rotation speed when electric power is supplied from the external power supply to the high-voltage battery 4 via the normal charging connector 6 or the quick charging connector 7. The contactor switching control unit 5 transmits, for example, information that "charging was interrupted due to an abnormality" to the information receiving device 111 of the owner of the vehicle 100 via the external server 110.

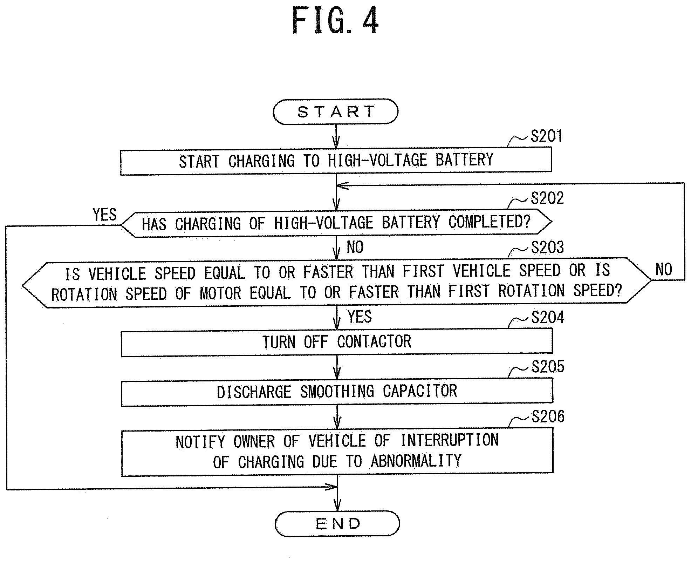

A charge control process using the charge/discharge control device according to the second embodiment with the above-described configuration will be described with reference to Fig. 4. Additionally, the charge control process to be described below is started when it is detected that the charging connector of the external power supply is connected to the normal charging connector 6 or the quick charging connector 7.

In step S201, the contactor switching control unit 5 turns on the normal charge contactor 62 when the charging connector of the external power supply is connected to the normal charging connector 6 while the negative electrode side contactor 41 and the positive electrode side contactor 42 are turned on and starts the charging to the high-voltage battery 4 while the negative electrode side quick charge contactor 71 and the positive electrode side quick charge contactor 72 are turned on when the charging connector of the external power supply is connected to the quick charging connector 7. After the process of step S201 is executed, the contactor switching control unit 5 executes the process of step S202.

In step S202, the contactor switching control unit 5 determines whether or not the charging of the high-voltage battery 4 is completed.

When it is determined that the charging of the high-voltage battery 4 is completed, the contactor switching control unit 5 ends the charge control process. When it is determined that the charging of the high-voltage battery 4 is not completed, the contactor switching control unit 5 executes the process of step S203.

In step S203, the contactor switching control unit 5 determines whether or not the vehicle speed of the vehicle 100 is equal to or faster than the first vehicle speed or the rotation speed of the motor 2 is equal to or faster than the first rotation speed.

When it is determined that the vehicle speed of the vehicle 100 is equal to or faster than the first vehicle speed or the rotation speed of the motor 2 is equal to or faster than the first rotation speed, the contactor switching control unit 5 executes the process of step S204. When it is determined that the vehicle speed of the vehicle 100 is not equal to or faster than the first vehicle speed and the rotation speed of the motor 2 is not equal to or faster than the first rotation speed, the contactor switching control unit 5 executes the process of step S202.

In step S204, the contactor switching control unit 5 turns off the negative electrode side contactor 41, the positive electrode side contactor 42, the normal charge contactor 62, the negative electrode side quick charge contactor 71, and the positive electrode side quick charge contactor 72. After the process of step S204 is executed, the contactor switching control unit 5 executes the process of step S205.

In step S205, the contactor switching control unit 5 discharges the smoothing capacitor 31. After the process of step S205 is executed, the contactor switching control unit 5 executes the process of step S206.

In step S206, the contactor switching control unit 5 notifies the information receiving device 111 of the owner of the vehicle 100 that charging is interrupted due to an abnormality via the external server 110. After the process of step S206 is executed, the contactor switching control unit 5 ends the charge control process.

In this way, in the second embodiment, the contactor switching control unit 5 transmits abnormality occurrence information to the information receiving device 111 of the owner of the vehicle 100 via the external server 110 when the negative electrode side contactor 41, the positive electrode side contactor 42, the normal charge contactor 62, the negative electrode side quick charge contactor 71, and the positive electrode side quick charge contactor 72 are switched to the off state after the speed of the vehicle 100 becomes equal to or faster than the above-described first vehicle speed or the rotation speed of the motor 2 becomes equal to or faster than the above-described first rotation speed when electric power is supplied from the external power supply to the high-voltage battery 4 via the normal charging connector 6 or the quick charging connector 7.

Accordingly, since the owner of the vehicle 100 can be made aware that an abnormality such as a collision with the vehicle 100 has occurred even if the owner of the vehicle 100 is absent in the vicinity of the vehicle 100, it is possible to suppress the vehicle 100 from being inadvertently touched after the collision and to reduce the risk of electric shock.

In the respective above-described embodiments, an example has been described in which the contactor switching control unit 5 performs various kinds of determination or calculation based on various sensor information, but this invention is not limited thereto. For example, the vehicle may include a communication unit capable of communicating with an external device such as an external server, perform various kinds of determination or calculation by the external device based on detection information of various sensors transmitted from the communication unit, receive the determination result or calculation result by the communication unit, and perform various control using the received determination result or calculation result.

While embodiments of this invention have been described, it is apparent that some artisan could have made changes without departing from the scope of this invention. It is intended that any and all such modifications and equivalents are involved in the appended claims.

### (DESCRIPTION OF REFERENCE NUMERALS)

1, 100 ... Vehicle, 2 ... Motor, 3 ... Inverter, 4 ... High-voltage battery, 5 ... Contactor switching control unit, 6 ... Normal charging connector (charging port), 7 ... Quick charging connector (charging port), 8 ... Drive wheel, 9 ... External communication unit, 21 ... Rotation speed sensor, 31 ... Smoothing capacitor, 41 ... Negative electrode side contactor (contactor), 42 ... Positive electrode side contactor (contactor), 43 ... Precharge contactor, 44 ... Precharge resistance, 51 ... Vehicle speed sensor, 62 ... Normal charge contactor (contactor), 71 ... Negative electrode side quick charge contactor (contactor), 72 ... Positive electrode side quick charge contactor (contactor), 110 ... External server, 111 ... Information receiving device

## Claims

1. A charge/discharge control device for a vehicle including a high-voltage battery corresponding to a main power supply, a charging port connected to a charging connector of an external power supply and supplying electric power to the high-voltage battery, an inverter driving a motor by receiving electric power supplied from the high-voltage battery, and a contactor connecting and disconnecting an electrical connection between the high-voltage battery, the inverter, and the charging port, comprising:
a contactor switching control unit switching a connection/disconnection state of the contactor,
wherein the contactor switching control unit turns off the contactor if a speed of the vehicle is equal to or faster than a first vehicle speed when electric power is supplied from the external power supply to the high-voltage battery via the charging port.

2. The charge/discharge control device according to claim 1,
wherein the motor is directly connected to a drive wheel driving the vehicle and the contactor switching control unit turns off the contactor if a rotation speed of the motor is equal to or faster than a first rotation speed when electric power is supplied from the external power supply to the high-voltage battery via the charging port.

3. The charge/discharge control device according to claim 1 or 2,
wherein a smoothing capacitor is connected between a positive electrode and a negative electrode of the inverter, and
wherein the contactor switching control unit discharges electric power of the smoothing capacitor to the motor in a single phase by the inverter when the contactor is switched to the off state.

4. The charge/discharge control device according to any one of claims 1 to 3, further comprising:
an external communication unit capable of communicating with an external server,
wherein the contactor switching control unit transmits abnormality occurrence information to an information receiving device of an owner of the vehicle via the external server when the contactor is switched to the off state.
